# EUROPEAN PATENT APPLICATION

(11) **EP 3 503 339 A1**
(43) Date of publication of application: **26.06.2019**
(21) Application number: 17209530.9
(22) Date of filing: 21.12.2017
(51) Int. Cl.: H02J 7/00

(54) **SUPPORT UNIT FOR A PAYMENT TERMINAL AND COVER FOR SUCH SUPPORT UNIT**

(71) Applicant: Ergonomic Solutions International Limited, Epsom Surrey KT19 9QQ (GB)
(72) Inventor: BURMESTER, Benny, 9400 Nørresundby (DK)
(74) Representative: Tellefsen, Jens J.

(57) **Abstract**

The invention relates to a support unit capable of supporting at least two mobile devices. The support unit comprises two support surfaces for supporting the at least two mobile device. The support surfaces comprises retaining elements of a type, a shape and a size congruent with a type, a shape and a size of the at least one mobile device or of a cover of at least one mobile device. The support unit has at least a first electric interface and a second electric interface for a corresponding first electric interface and second electric interface, respectively, of different first and second mobile devices. The retaining elements are at least for retaining a mobile device being a payment terminal, and the retaining elements consisting of tongues extending along linear lines at opposite sides of a support surface for a cover for the payment terminal.

## Description

### Field of the Invention

The invention relates to a support unit for supporting at least one, preferably two, mobile devices and where the one or both or all mobile devices may be charged via the support unit, when the one or more mobile devices are supported by the support unit. The invention specifically relates to a support unit for supporting a payment terminal.

### Background of the Invention

Support units for mobile devices are known, specifically also for supporting a mobile device being a payment terminal. The support unit provides a holder for the payment terminal so that the payment terminal may be supported at various places such as a wall or in a vehicle or other places. The same support unit may also be uses for carrying the payment terminal by hand or in a belt. However, the support unit is only capable of supporting and carrying a payment terminal at various places and locations.

### Object of the Invention

An object of the invention may be provide a support unit capable of supporting more than one mobile device. Another object of the invention may be to enable mobile devices to be charged, even when supported by the support unit. Still another object of the invention may be to have access to one or more of the functionalities of the one or more mobile devices, even when the mobile devices are supported by the support unit.

### Description of the Invention

One or more of the objects of the invention is obtained by
- a support unit comprising at least two support surfaces for supporting the at least two mobile device along the support surfaces of the support unit, and where one of the at least two mobile devices is a payment terminal, and
- at least one of the support surfaces comprising retaining elements of a type, a shape and a size congruent with a type, a shape and a size of the at least one mobile device, said retaining elements capable of retaining at least one mobile device to the at least one support surface, and
- the support unit having at least a first electric interface and a second electric interface for a corresponding first electric interface and second electric interface, respectively, of different first and second mobile devices, and
- the support unit having at least one electric socket of a type, a shape and a size congruent with a type, a shape and a size of a plug of a charging device being external to the support unit and capable of being electrically connected to the support unit, and
- and the support unit having a first wired connection between the at least one electric socket and the first electric interface and having a second wired connection between the at least one electric socket and the second electric interface.

A support unit with electric interfaces for individual mobile devices, and a socket of the support unit being congruent with a charging device provides a possibility of charging one or more devices supported by the support unit. However, also having wired connections as mentioned, provides a possibility of replacing electric interfaces and/or electric socket, depending on the mobile devices to be supported by the support unit and/or depending on the socket of the charging device used for charging.

According to a preferred embodiment of the invention, both of the at least a first electrical interface and a second electric interface, both electric interfaces communicating electrically with only one electrical plug of the support unit, said electrical plug of the support unit capable of being connected to only one electrical plug of an electrical charger, whereby at least two different mobile devices connected to the first electrical interface and the second electrical interface, respectively, are capable of being electrically charged by the only one electrical charger, when the electrical plug of the support unit is connected to the electrical plug of the electrical charger, and when the at least two mobile devices are supported by the support unit and are connected to the electrical interfaces. Two mobile devices, the one at least being a payment terminal, is capable of being charged by the support unit via one electrical socket of the support unit, when both the mobile devices are placed in the support unit.

According to another embodiment of the invention, the support unit comprises a printed circuit board or other electronic circuit for controlling at least charging of the at least two mobile devices when supported by the support unit, where the electronic circuitry has a first wired connection extending between the electronic circuit and the first electrical interface, and where the electronic circuit has a second electrical wired extending between the electronic circuit and the second electrical interface, and where at least one of the first electrical connection and the second electrical connection are detachable and is replaceable by another electrical connection, whereby various mobile devices may be supported by the support unit and may be connected with an electrical plug of the support unit. Different mobile devices may be placed in, and charged via, the support unit by inserting a selected wired connection with a plug corresponding to a socket in the mobile device(s) for charging the mobile device(s).

According to another embodiment of the invention, at least one of the electrical plugs of the support unit is in a fixed position of the support unit when the electrical plug is connected via the electrical connection to the electronic circuit of the support unit, and where the fixed position of the electrical plug is selected and provided so that the location of the electrical plug of the support unit is in a position corresponding to a position of an electrical plug or electrical contact pads of the mobile device intended for being electrically charged, when the mobile device is supported by the support unit. Positioning the electrical charging plug of the wired connection in a position corresponding to a position of an electrical plug or electrical contact pads of the mobile device intended for being electrically charged, when the mobile device is supported by the support unit provides a fixed support of the mobile device when being charged.

According to another embodiment of the invention, the electrical interface for the one mobile device being a payment terminal is configured as a contact surface provided with a plurality of electrical pads extending substantially along the contact surface, the electrical pads of the contact surface being provided at locations along the plane contact surface corresponding to correlating contact pads of the payment terminal, and where the contact surface is detachable and is replaceable by another contact surface, whereby various payment terminals may be supported by the support unit and may be connected with the electrical pads of the contact surface. Different payment terminals may be placed in, and charged via, the support unit by inserting a selected contact surface corresponding to contact pads of a selected payment terminal.

According to another embodiment of the invention, the retaining elements for retaining the one mobile device being a payment terminal consist of tongues extending along linear lines at opposite sides of a support surface for the payment terminal, said tongues intended for interacting with corresponding grooves extending along opposite sides of the payment terminal, when the payment terminal is supported by the support unit, the tongues and grooves thereby retaining the payment terminal to the support unit, when the payment terminal is supported by the support unit. Tongue and groove retaining elements provide a reliable support of the mobile device and provide an easy insertion and retraction of the mobile device of the cover for the mobile device.

According to another embodiment of the invention, the retaining elements for retaining the one mobile device being a payment terminal consist of tongues extending along linear lines at opposite sides of a support surface for a cover for the payment terminal, said tongues intended for interacting with corresponding grooves extending along opposite sides of a payment terminal cover, when the payment terminal cover is supported by the support unit, the tongues and grooves thereby retaining the payment terminal cover to the support unit, when the payment terminal cover is supported by the support unit, and the payment terminal cover thereby retaining the payment terminal to the support unit, when the payment terminal is supported by the payment terminal cover. Tongue and groove retaining elements provide a reliable support of the mobile device and provide an easy insertion and retraction of the mobile device of the cover for the mobile device.

According to another embodiment of the invention, said support unit has an electrical interface with contact pads for electrical contact with corresponding electrical contact pads of a payment terminal to be supported by the support unit, and where the electrical interface has an outer contour, said outer contour of the electrical interface having a size and a shape being congruent with a size and shape of an inner contour of an aperture of a cover for the payment terminal, said cover having a cavity intended for and capable of having a selected payment terminal placed therein, and said cover intended for and capable of being retained to the support unit. An outer contour of the electrical interface of the support unit being congruent with an inner contour of an inner circumference of an aperture of the cover provides a good alignment between contact pads of the electrical interface and contact pads of the payment terminal.

According to another embodiment of the invention, at least one of the mobile devices is provided with a mobile phone frame for partly covering one mobile device being a mobile phone, said mobile phone frame having fastening elements for fastening the mobile phone frame to the at least one support surface of the support unit, whereby the mobile phone, when supported by the support unit and when fastened to the support surface by the mobile phone frame is fixed to the support unit, and said mobile phone framer having an aperture allowing access through the mobile phone frame to a user interface of the mobile phone, when the mobile phone is supported by the support unit. Holding mobile phone to the support unit by a frame provides a reliable support of the mobile phone and avoids the mobile phone unintentionally being detached from the support unit, possibly also functioning as mobile phone anti-theft means.

According to another embodiment of the invention, said cover has a having a cavity intended for and capable of having a selected payment terminal placed therein, and said cover intended for and capable of being retained to the support unit by said cover having grooves extending outside the cavity and along parallel linear lines at opposite sides of the cover, said grooves intended for interacting with corresponding tongues extending along parallel linear lines at opposite sides of a support unit for supporting the cover, and when the cover is supported by the support unit, the tongues and grooves thereby retaining the cover to the support unit, and the cover thereby retaining the payment terminal to the support unit, when the payment terminal is placed in the cover.

According to another embodiment of the invention, said cover has an aperture with an inner contour, said inner contour of the aperture having a size and shape congruent with an outer contour of an electrical interface of a support unit, said cover having a cavity intended for and capable of having a selected payment terminal placed therein, and said cover intended for and capable of being retained to the support unit, and said electrical interface of the support unit having contact pads for electrical contact with corresponding electrical contact pads of a payment terminal to be placed in the cover.

According to another embodiment of the invention, a plurality of covers for payment terminals comprises comprising at least a first cover and a second cover,
- said first cover having grooves extending outside the cavity and along linear lines at opposite sides of the cover, said grooves intended for interacting with corresponding tongues extending along opposite sides of a support unit for supporting the payment terminal cover, and when the payment terminal cover is supported by the support unit, the tongues and grooves thereby retaining the payment terminal cover to the support unit, when the payment terminal cover is supported by the support unit, and the payment terminal cover thereby retaining the payment terminal to the support unit, when the payment terminal is supported by the payment terminal cover, and
- said second cover having grooves extending outside the cavity and along linear lines at opposite sides of the cover, said grooves intended for interacting with corresponding tongues extending along opposite sides of a support unit for supporting the payment terminal cover, and when the payment terminal cover is supported by the support unit, the tongues and grooves thereby retaining the payment terminal cover to the support unit, when the payment terminal cover is supported by the support unit, and the payment terminal cover thereby retaining the payment terminal to the support unit, when the payment terminal is supported by the payment terminal cover, and
- where a distance between the parallel linear lines of the first cover is the same as a distance between the parallel linear lines of the second cover, whereby the first cover and the second cover, individually, is capable of being supported by the one and same support unit having tongues extending along parallel linear lines, provided a distance between the parallel linear lines of the tongues of the support unit is less than the distance between the parallel linear lines of the plurality of payment terminal covers.

### Description of the Drawing

Fig. 1A-1D are figures showing a cover according to the invention, the cover holding a payment terminal,
Fig. 2A-2D are figures showing a support unit for the cover according to the invention,
Fig. 3A-3D are figures showing a charging dock for holding a support unit for the cover according to the invention,
Fig. 4A and 4B are figures showing a support unit supporting a first cover according to the and supporting a mobile phone and placed in a charging dock,
Fig. 5A and 5B are figures showing a support unit supporting a second cover according to the and supporting a mobile phone and placed in a charging dock,
Fig. 6A-6D are figures showing an electronic circuit and a first wired connection with plugs and a second wired connection with plugs, all for a support unit,
Fig. 7A-7J are figures showing various holders for a cover according to the invention, all holders capable of holding the at least two different covers,
Fig. 8A-8B are figures showing a holder for a tablet, the tablet holder also capable of holding at least two different covers.

### Detailed Description of the Invention

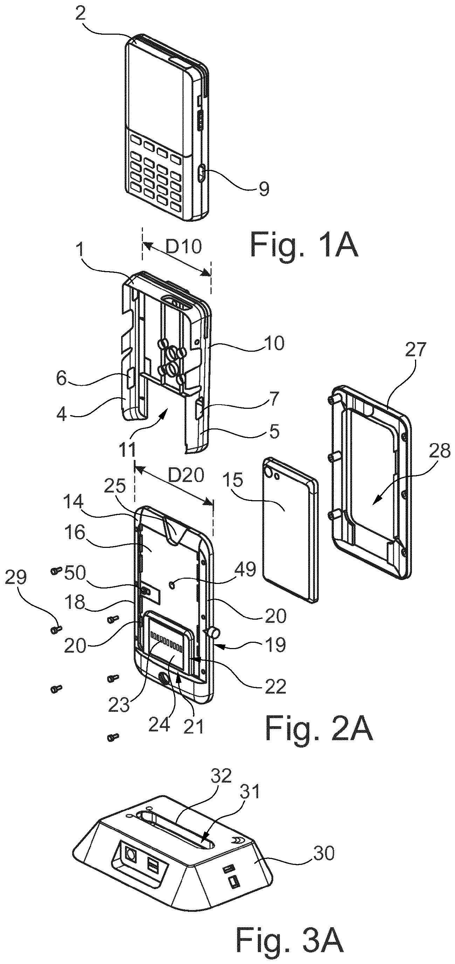

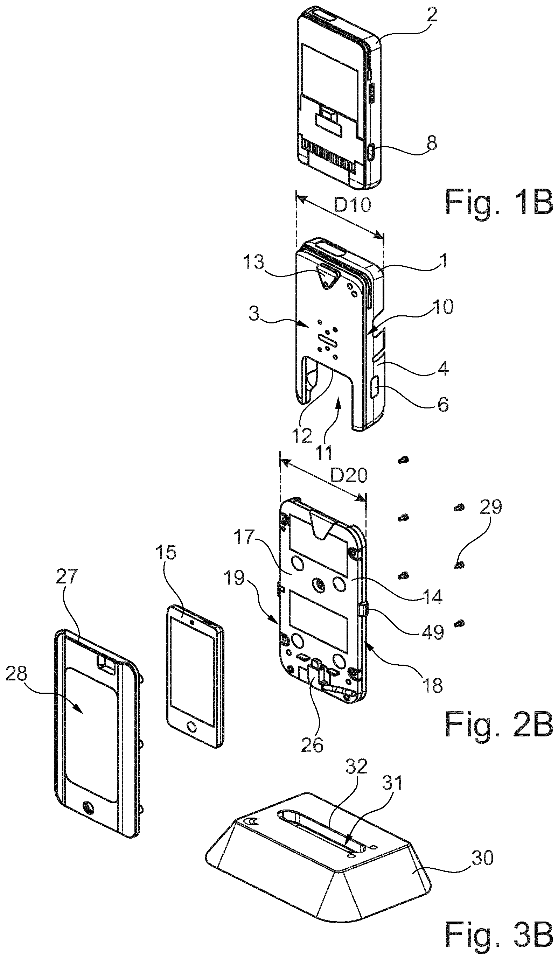

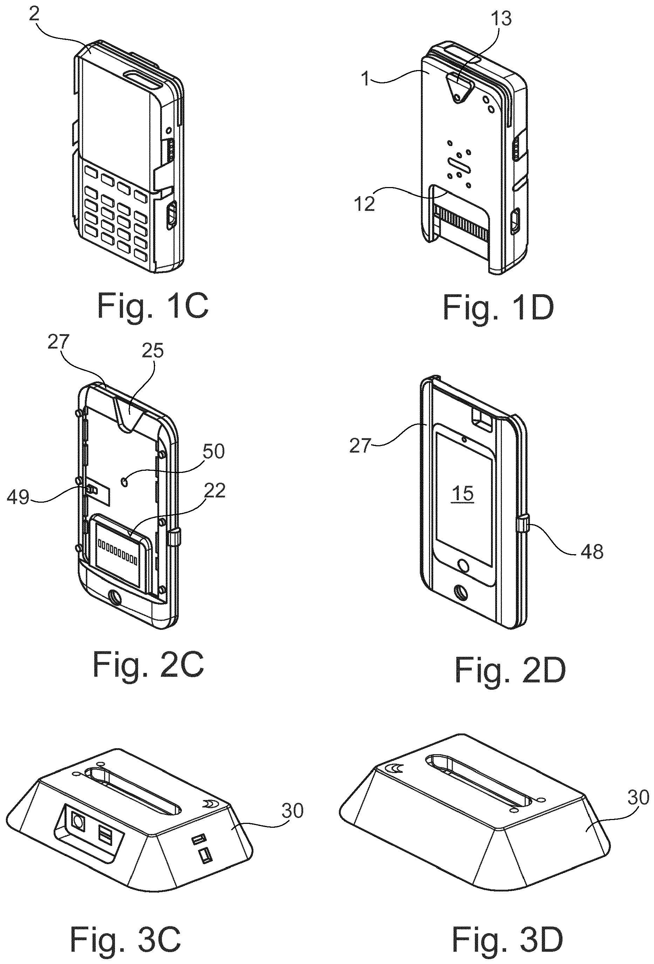

Fig. 1A and Fig. 1B show a cover 1 holding a payment terminal 2. The cover 1 has a rear surface 3 and has opposite side walls 4,5. The side walls 5,5 define a cavity having a size and a shape congruent with an outer size and shape of the payment terminal 2 and the opposite side walls 4,5 hold the payment terminal 2 firmly to the cover 1. The opposite side walls 4,5 also have apertures 6,7 allowing access and control of buttons 8 and possible plugs 9, respectively, for external equipment to be attached to the payment terminal 2, when the payment terminal 2 is placed in the cover 1 The apertures 6,7 of the cover 1 is positioned in the opposite side walls 4,5 corresponding to buttons 8 and plugs 9 of the payment terminal 2, which the cover 1 is holding.

Along the opposite sidewalls 4,5 of the cover 1, the cover 1 is provided with grooves 10 extending along linear lines. The grooves 10 extend along parallel lines at the opposite side walls 4,5 of the cover 1. The grooves 10 are intended for interacting with corresponding tongues of a support unit (see Fig. 2A). At a bottom of the cover 1, as viewed, the cover 1 is provided with an aperture 11. The aperture has an inner perimeter 12. The bottom of the cover 1 is where a bottom of the payment terminal 2 is positioned, when the payment terminal 2 is placed in the cover 1. The aperture 11 allows access between an electric, and possibly electronic, interface of a support unit (see Fig. 2A) and charging, and possibly data transfer, terminals of the payment terminal 2, when the payment terminal 2 is placed in the cover 1 and when the cover 1 is placed in a support unit.

A top of the cover 1 is provided with a male part 13, see Fig. 1B, of a locking structure. A congruent female part of the locking structure is provided at a top of the support unit (see Fig. 2A). The male part 13 has the shape of a triangle with a point of the triangle pointing downwards towards the bottom of the cover 1. Accordingly, the male part of the locking structure is tapered towards the bottom of the cover 1.

Alternative shapes of the male part of the locking structure may be selected. The male part of the locking structure may have a shape of part of a circle or oval with a widest part of the circle or oval extending along a top edge of the cover, or the male part of the locking structure may have a shape of a rectangle or other polygonal shape.

Fig. 2A and Fig. 2B show a support unit 14 capable of supporting, at the same time, a cover (see Fig. 1A and Fig. 1B) and a mobile device 15. In the embodiment shown, the mobile device 15 is a mobile phone. In part of the following, a mobile phone, also called a cellular phone, preferably a smart phone, is used as an example of the mobile device 15. Another example of a mobile device 15 may be any other smart device, preferably with a touch screen, such as an iPod®. The support unit 14 has one support surface 16 and another support surface 17. The one support surface 16 is capable of supporting the cover 1 and the other support surface 17 is capable of supporting the mobile phone 15. The support unit 14 is capable of, selectively, supporting both the cover 1 and the mobile phone 15, or supporting only the cover 1 or supporting only the mobile phone 15. The support unit has a top and a bottom and has opposite sides 18,19. The bottom is intended for being placed in a charging dock (see Fig. 3A and Fig. 3B) for charging a payment terminal 2 placed in the cover 1 and/or for charging a mobile phone 15 placed in the support unit 14.

Along the opposite sides 18,19 of the support unit 14, the support unit 14 is provided with tongues 20 extending along parallel linear lines. The tongues 20 are intended for interacting with corresponding grooves 10 of the cover 1 (see Fig. 1B). At the bottom of the support unit 14, the support unit 14 is provided with an interface 21. The interface 21 has an outer perimeter 22. The interface 21 is positioned where the bottom of the payment terminal 2 is positioned, when the payment terminal 2 is placed in the cover 1 and the cover 1 is placed in the support unit 14. The interface 21 has charging, and possibly data transfer, pads 23 intended for being connected with corresponding charging, and possibly data transfer, pads of the payment terminal 2, when the payment terminal 2 is placed in the cover 1, and when the cover 1 is placed in the support unit 14.

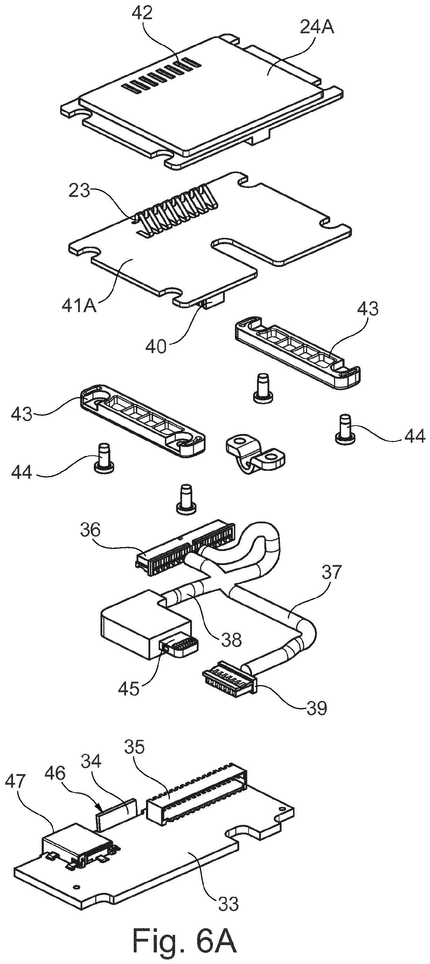

The interface 21 has a centre plate 24 within the outer perimeter 22. The outer perimeter 22 has an outer size and shape congruent with the inner perimeter 12 of the aperture 11 (see Fig. 1B) of the cover 1. The terminal 23 of the centre plate 24 within the outer perimeter 22 is connected to a PCB or other electronic circuit (see Fig 6A-6D).

A top of the support unit 14 is provided with a female part 25 congruent to a size and shape of the male part 13 (see Fig. 1B) of the locking structure provided at the top of the cover (see Fig. 1B). The female part 25 has the shape of a triangle with a point of the triangle pointing towards a bottom of the support unit 14. Accordingly, the female part 25 is tapered towards the bottom of the support unit.

Alternative shapes of the female part of the locking structure may be selected. The female part of the locking structure may have a shape of a part of a circle or oval with a widest part of the circle or oval extending along a top edge of the support unit or the female part of the locking structure may have a shape of a rectangle or other polygonal shape.

Referring to Fig. 1B and Fig. 2A, interaction between the cover 1 and the support unit 14 is described. Firstly, the payment terminal 2 is placed in the cover 1. Subsequently, the cover 1 is placed in the support unit 14 by the bottom of the cover being positioned at the top of the support unit 14. The grooves 10 along the opposite side walls 4,5 of the cover 1 are positioned in alignment with the tongues 20 along the opposite sides 18,19 of the support unit 14. The tongues 20 of the support unit 14 are sequentially inserted into the grooves 10 of the cover 1 by mutual linear displacement of the cover 1 and the support unit 14, until the bottom of the cover reaches the bottom of the support unit 14. When the cover 1 is in place in the support unit 14, the terminals of the interface of the support unit are in contact with the terminal of the payment terminal. When the cover 1 is in place in the support unit 14, the inner perimeter 12 of the aperture 11 of the cover 1 aligns with the outer perimeter 22 of the interface of the support unit 14.

Also, when the cover 1 is in place in the support unit 14, the male part 13 of the locking structure of the cover 1 aligns with the female part 25 of the locking structure of the support unit 14. Locking may be provided by a key lock (see Fig ...).

Fig. 2B shows the other support surface 17 of the support unit, opposite to the one support surface shown in Fig. 2A. The other support surface 17 is intended for supporting the mobile phone 15. An electrical plug 26 is positioned at the bottom of the support unit. The electrical plug 26 is positioned so that the electrical plug 26 is capable of interacting with a corresponding socket (not shown) of the mobile phone 15, when the mobile phone 15 is placed in the support unit 14. A mobile phone frame 27 is provided for holding the mobile phone 15 in place in the support unit 14.

The mobile phone frame 27 has an aperture 28 for accessing a touch screen of the mobile phone 15, when the mobile phone 15 is placed in the support unit 14 and is held in place by the mobile phone frame 27. In the embodiment shown, the mobile phone frame 27 is fixed to the support unit by screws 29. Other means of fixing the mobile phone frame 27 to the support unit 14 may be used instead of screws, such as a click-on means. However, screws have the advantage that a tool, that is, a screwdriver is needed for releasing the mobile phone frame 27 from the support unit 14. The mobile phone frame 27 may have a size and a shape configured for a size and shape of a selected brand and a selected model of mobile phone. Alternatively, the mobile phone frame may be configured for a plurality of sizes and shapes of various brands and/or various models of mobile phones. Even in the alternative, if the support unit 14 is intended for being used without a mobile phone, the cover may be a cover covering the entire other support surface 17, when not used for supporting a mobile phone.

Fig. 3A and Fig. 3B show a charging dock 30 for charging any device supported by the support unit 14, either for charging both a payment terminal 2 and a mobile phone 15, or for charging only a payment terminal 2, if only a payment terminal is supported by the support unit 14, or for charging only a mobile phone 15, if only a mobile phone is supported by the support unit 14. But, via the support unit, both a payment terminal 2 and a mobile phone 15 are capable of being charged at the same time. The charging dock has a cavity 31 having an aperture with an inner perimeter 32 congruent with an outer perimeter of the bottom of the support unit 14. Accordingly, the support unit 14 is capable of being placed in the charging dock 30 and is capable of standing upright in the charging dock 30 with either one of or both of the payment terminal 2 and the mobile phone 15 supported by the support unit 14 during charging.

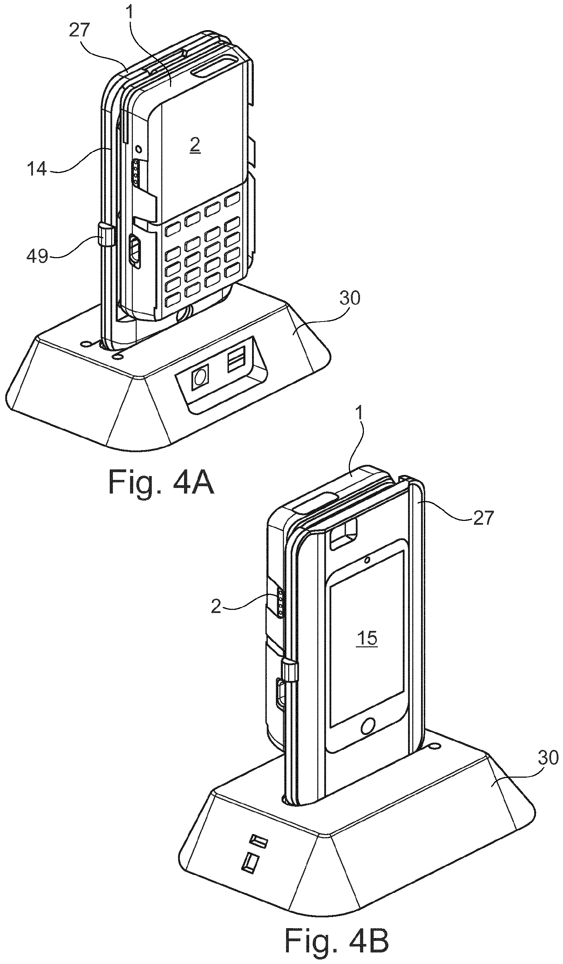

Fig. 4A and Fig. 4B show a support unit with a payment terminal and a mobil phone supported by the support unit. And with the support unit placed in the charging dock. In the embodiment shown, the payment terminal is of the Ingenico® ISMP4 Companion standard.

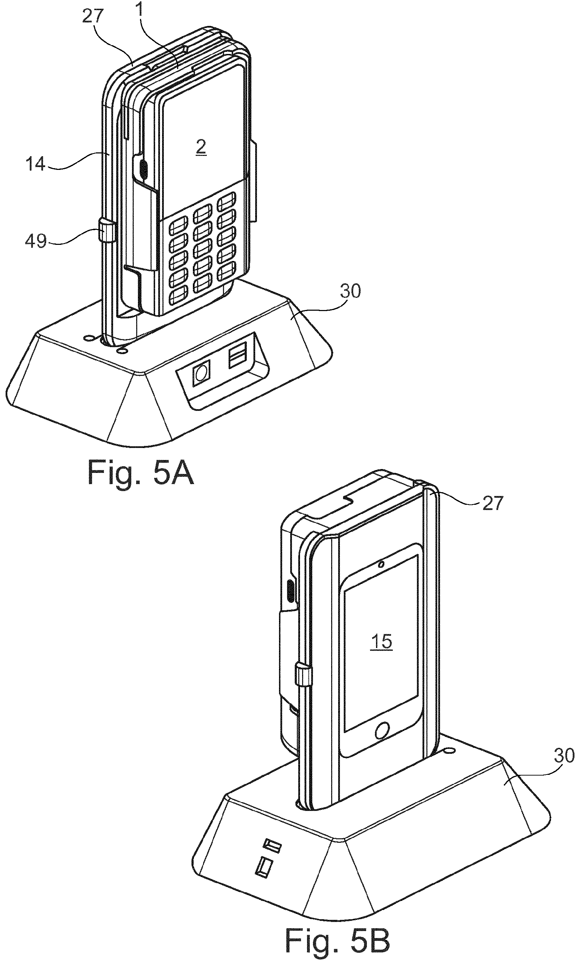

Fig. 5A and Fig. 5B show a support unit with a payment terminal and a mobile phone supported by the support unit. And with the support unit placed in the charging dock. In the embodiment shown, the payment terminal is of the Verifone® E355 standard.

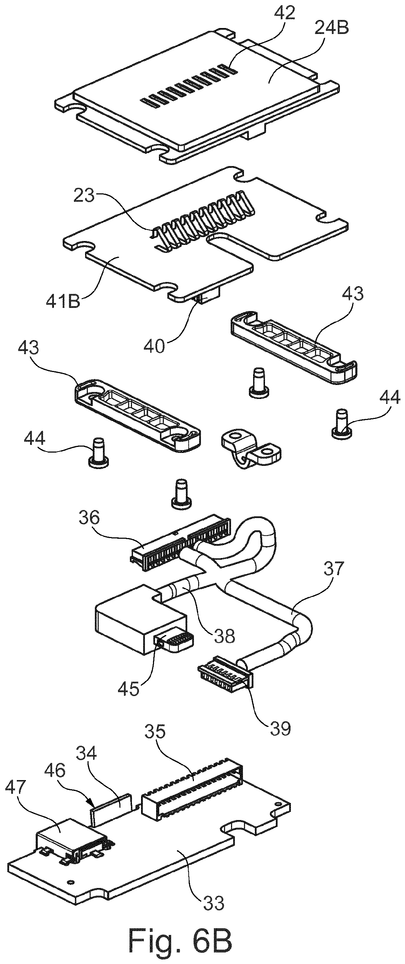

Fig. 6A and Fig. 6B show, in an exploded view, various parts of an electronic unit of the support unit 14. The electronic unit shown in Fig. 6A is for the Ingenico® ISMP4 Companion standard. The electronic unit shown in Fig. 6B is for the Verifone® E355 standard. The electronic unit comprises a base plate 33 with a printed circuit board (PCB) 34 or other electronic circuit. The base plate 33 also has a socket 35 intended for being connected with a plug 36. Extending from the plug 36 is a first wired connection 37 and a second wired connection 38. The base plate with the PCB 34 and the socket 36 together with the plug 36 and the first wired connection 37 and the second wired connection 38 is intended for being embedded within the bottom of the support unit 14.

The first wired connection 37 has a plug 39 for attaching an end of the wired connection 37 to a corresponding socket 40 of a contact pad plate 41 with contact pads 23 (see also Fig. 2A) for interfacing with corresponding contact pads of a payment terminal, thereby connecting the plug 35 and the payment terminal 2, when the payment terminal 2 is placed in the cover 1, and when the cover 1 is placed in the support unit 14.

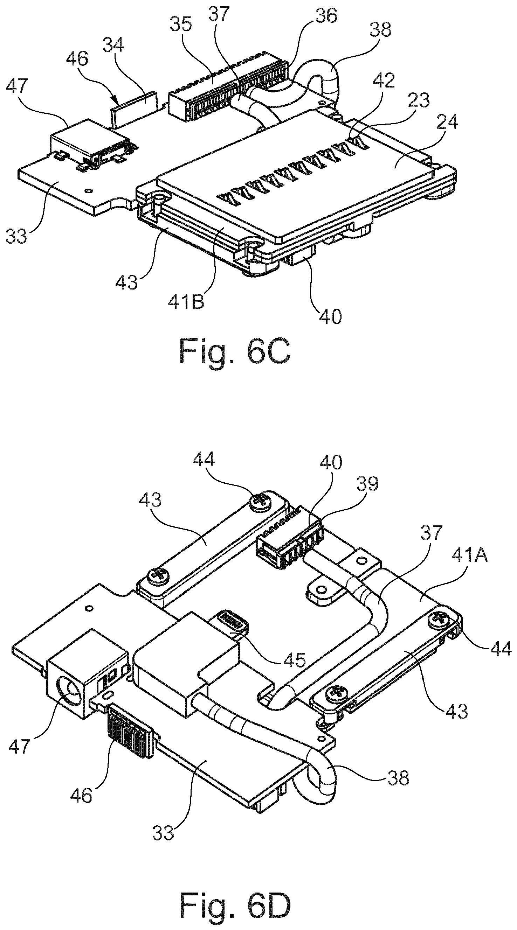

The plug 36 for attaching the first wired connection 37 to the plug 35 is non-dependant on the size and shape and type of contact pad plate 41 and the centre plate 24. When in a non-exploded, assembled state (see Fig. 6C), the contact pads 23 extend through contact pad orifices 42 in the centre plate 24. Assembly of the contact pad plate 41 and the centre plate 24 is provided by braces 43 and screws 44, the screws 44 during assembly being screwed into corresponding threads (not shown in any Figure) of the support unit.

In the figures, two different centre plates 24A and 24B are shown, one contact pad plate 41A and centre plate 24A intended for the Verifone® E355 standard and another contact pad plate 42B and centre plate 24B intended for the Ingenico® ISMP4 Companion standard. Contact pad plates and centre plates of other present standards or interfaces of possible future standards are capable of being connected by using another layout of the interface than the ones shown.

The contact pad plate 41 with contact pads 23 extending through the orifices 42 of the centre plate 24constitutes the interface 21 (see fig. 2A). The centre plate 24, when the electronic circuit constitutes part of the support unit 14, is positioned within the outer perimeter 22 shown in Fig 2A. Accordingly, if the support unit 14 is fitted with one centre plate 24 of one interface 21 or is fitted with another centre plate 24 of another interface 21, or if one centre plate 24 of one interface 21 is replaced with another centre plate 25 of another interface 21, both centre plates fit within the outer perimeter 22 shown in Fig. 2B. The one support surface 16 is independent on the type of interface 21 used, such as either the Ingenico® ISMP4 Companion standard or the Verifone® E355 standard, as long as the centre plate 24 of the interface 21 fits within the outer perimeter 22 shown in Fig 2B.

The second wired connection 38 has a plug 45 for attaching an end of the second wired connection 38 to a socket (not shown) of mobile phone (see fig. 2B), thereby connecting the plug 36 with the mobile phone 15, when the mobile phone 15 is placed in the support unit 14.

The second wired connection 38 between the plug 36 and the mobile phone 15 is selected depending on the type of socket (not shown) of the mobile phone 15. According to today's most used standards of sockets for mobile phones, the plug 45 of the second wired connection 35 is preferably one of the following types of plugs: Lightning, USB-C and Micro USB. In the embodiment shown, the plug 40 is a of the Lightning type. However, the plug 36 for attaching one end of the second wired connection 38 to the socket 35 is the same, non-dependant on the type of plug 45 for attaching the other end of the second wired connection 38 to a socket of mobile phone.

The base plate 33 also has a first charging socket 46 (see also Fig. 6D) at a bottom of the base plate 33. The first charging socket 46 is for providing electric connection between a corresponding charging plug of an electric charging device constituted by an electric charging dock (see Fig. 3A and Fig. 3B), in which the support unit 14 is placed for electric charging of a payment terminal 2 and/or a mobile device 15, when the payment terminal 2 is placed in a cover 1, and when the cover 1 is placed in the support unit 14 and/or when the mobile device 15 is placed in the support unit 14.

The PCB 33 also has a second charging socket 47 (see also Fig. 6D), such as a so-called DC round socket, at the bottom of the base plate 33. The second charging socket 47 is for providing electric connection between a corresponding charging plug of an electric charging device constituted by an external electric charger (not shown in any figure) for electric charging of a payment terminal 2 and/or a mobile device 15, when the payment terminal 2 is placed in a cover 1, and when the cover 1 is placed in the support unit 14 and/or when the mobile device 15 is placed in the support unit 14.

The first charging socket 46 and the second charging socket 47 for electrical charging of a payment terminal and/or a mobile device is non-dependant on the type of interface 21 for a payment terminal and is non-dependant on the type of plug 45 for attaching the end of the second wired connection 38 to a socket of mobile device.

Accordingly, any type of payment terminal capable of being supported by the support unit and/or any type of mobile device capable of being supported by the support unit may be charged via the support unit without any need of exchanging the first charging socket 46 and/or the second charging socket 47.

In an alternative embodiment of the base plate 33, only one charging socket, either only the first charging socket 46 or only the second charging socket 47 is provided. In an even alternative embodiment of a base plate, no charging socket is provided. In that case, a payment terminal and a mobile device must be charged separately and individually.

The support unit 14 constitutes a common basis for both a payment terminal and a mobile device. The support unit constitutes a common basis for charging both a payment terminal and a mobile phone supported by the support unit, and the support unit also constitutes a common basis for the payment terminal and the mobile phone possibly transferring data between each other. And, the first wired connection 37 and/or the second wired connection 38 may be fitted or exchanged dependent on the payment terminal and/or dependant the mobile phone to be placed in the support unit, without having to fit or exchange the support unit as such. Accordingly, the support unit as such including the base plate 33 with the PCB 34, the socket 35 and possibly also the first charging socket 46 and/or the second charging socket 47 is the same, non-dependent on the brand and type of payment terminal to be placed in the support unit and non-dependent on the brand and type of mobile phone to be placed in the support unit.

In the embodiment shown, both the first wired connection 37 between the plug 36 and the interface 21 for the payment terminal and the second wired connection 38 between the plug 36 and the mobile device are wired connections. In alternative embodiments, either both or one of the connections are wireless connections between the plug 36 and the payment terminal and/or the mobile device. If both or one of the connections are wireless connections, plugs 39,45 are not needed for connecting with the payment terminal and/or the mobile device.
However, according to existing technology, if both or the one connection is wireless, only data exchange is possible between the PCB 34 or other electronic circuit and the payment terminal and/or the mobile device. Electric charging is not possible via a wireless connection, and the payment terminal and/or the mobile device must be charged, separately and individually, via other means than via the one charging plug 46 or the second charging plug 47.

In the embodiment shown, the payment terminal 2 is placed in a cover 1, and the cover 1 is provided with grooves 10 intended for interacting with tongues 20 of the support unit 14, thereby holding he payment terminal to the support unit 14. In the alternative, the payment terminal is not placed in a cover and the payment terminal itself has grooves extending along opposite linear lines at opposite sides of the payment terminal itself In such alternative, grooves of the payment terminal itself are intended for interacting directly with tongues of the support unit, and no holder is needed.

A distance D10 between the opposite parallel linear lines along which the grooves 10 at opposite sides 4,5 of the cover 1 corresponds to a distance D20 between the parallel opposite linear lines along which the tongues 20 of the support unit 14 extend. Thereby, the grooves 10 of the cover 1 interact with the tongues in an accurate and secure manner, supporting and holding the cover 1 to the support unit 14 and supporting and holding a payment terminal 2, when placed in the cover 1, to the support unit 14.

When possibly another payment terminal needs being supported by the support unit, other than a payment terminal initially supported, another cover having a size and a shape congruent with the other payment terminal may be placed in the support unit. A distance D10 between groves 10 extending along parallel opposite linear lines at opposite sides 4,5 of the other cover 1 corresponds to the distance D20 between the parallel opposite linear lines along which the tongues 20 of the support unit 14 extend.

By use of different covers, each having a cavity with a size and a shape congruent with an outer size and shape of a selected payment terminal, but all different covers having a distance D10 between grooves 10 extending along opposite parallel linear lines at opposite sides of the covers corresponding to the distance D20 between the linear lines along which the tongues 20 of the support unit 14 extends, different selected payment terminals may be supported, individually and not at the same time, by the support unit via a selected cover having a size and a shape congruent with a selected payment terminal. Accordingly, the support unit is non-dependent on the payment terminal to be supported, as long as the selected cover for a selected payment terminal has a distance between grooves extending along linear lines corresponding to the distance between the linear lines along which the tongues of the support unit extend.

The support unit has additional features for assisting safe use of the support unit.

The support unit has a finger-release lock 48 provided at one side of the support unit. The finger-release lock has a male part or female part (not shown) of a lock intended for interacting with a congruent female part or male part (not shown) of a cover for a payment terminal or a congruent female part or male part (not shown) of a payment terminal itself. The finger-release lock is spring-biased. If the finger-release lock is not activated by a finger of a user, the male part or female part of the lock is interacting with the congruent female part or male part of a cover for a payment terminal or the congruent female part or male part of a payment terminal itself.

If the finger-release lock is activated by a user by pushing the lock from the side of the support unit, interaction is released between the male part or female part of a lock of the support unit and the congruent female part or male part of the cover for a payment terminal or the congruent female part or male part of a payment terminal itself.

The finger-release lock, when interaction is present, prevents the cover with a payment terminal, or prevents the payment terminal itself, from being displaced in relation to the support unit, by preventing sliding of the grooves along the tongues. Accordingly, even if the support unit with a cover with a payment terminal or with just a payment terminal itself placed in the support unit unintentionally is positioned upside/down, the cover with a payment terminal, or just a payment terminal itself, when placed in the support unit, will not displace from the support unit.

When a cover with a payment terminal, or just a payment terminal itself, intentionally is to be released from the support unit, a user pushed the finger-release lock, and the cover with a payment terminal, or just a payment terminal itself, is allowed being displaced from the support unit by sliding the cover with a payment terminal, or by sliding a payment terminal itself, upwards in relation to the support unit.

The support unit also has a hole 49 in a centre of the one support surface 16. The hole 49 is intended for allowing a screw (not shown) passing through a hole in the cover and interacting with a congruent thread in the hole 49, when the cover or the payment terminal is placed in the support unit. Accordingly, alternative to, or additional to, the finger-release lock 48, the cover with a payment terminal placed in the cover, is not only locked, but is fixed to the support unit by fixing means such as a screw, thus needing a tool such as a screwdriver for releasing the cover with the payment terminal placed therein. A risk of the cover with a payment terminal placed therein being stolen is thereby eliminated or at least reduced. Also, a risk of the cover with a payment terminal placed therein accidently being released is also eliminated or at least reduced.

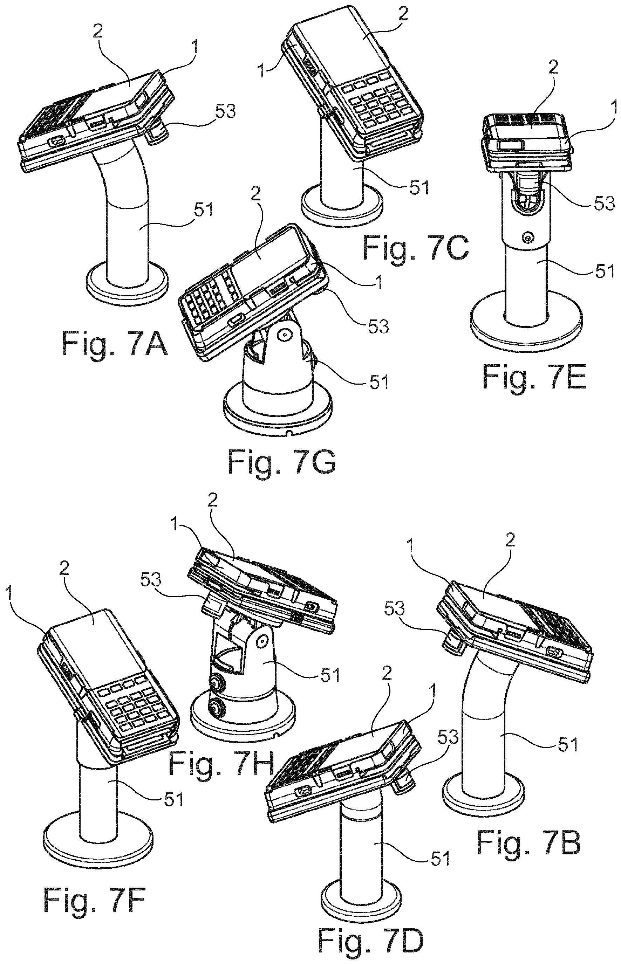

Fig 7A-Fig. 7H show various holders 50 for holding a cover 1 according to the invention. The various holders are mounted to various table stands 51. The various holders for the cover are different in relation to the type of, the size of and the function of the holders. The various holders are intended for holding at least one, but preferably intended for, individually and separately, holding at least two different payment terminals, either different terminals in relation to size and shape and/or different terminal in relation to position of electrical pads for interface with equipment external to the payment terminal. By use of a cover according to the invention, and by providing each of the various holders with one part of a joining structure such as tongues capable of interacting with another part of the joining structure such as grooves of the cover, the various holders are non-dependent on the payment terminal being placed in the holder as long as a distance between, as example, tongues provided along opposite linear lines of the holder have a mutual distance similar to a distance between, as example, grooves along parallel opposite linear lines, along side edges of the cover.

In Fig. 7A-Fig. 7H, the joining structure is a groove and tongue joining structure, with the grove provided along opposite sides of the cover and with the tongues provided along opposite side edges of the support unit. In the alternative, the payment terminal itself is provided with grooves along opposite sides of the payment terminal. In such embodiment, no cover is needed for holding the payment terminal to the holder. Grooves of the payment terminal itself constitute the grooves, which tongues of the holder is interacting with for holding the payment terminal to the holder.

Other types of joining structures may be used for holding the cover or the payment terminal itself to the support unit. As example, the joining structure may be one part of a magnetic joining structure being a part of the support unit and another part of a magnetic joining structure being part of the cover or the payment terminal itself. Thus, either the support unit or the cover or the payment terminal itself may be provided with a magnet with a selected polarity, and either the cover or the payment terminal itself or the support unit, respectively, may be provided with a piece of magnetic metal or with a magnet with a polarity opposite to the selected polarity, and which piece of metal, or which magnet with opposite polarity, the magnet with a selected polarity of the support unit or the cover or the payment terminal itself may interact with, thereby holding the cover or the payment terminal itself to the support unit.

Another example, the joining structure may be one part of a click-on joining structure being part of the support unit, and another part of a click-on joining structure being part of the cover or of the payment terminal itself Thus, either the support unit or the cover or the payment terminal itself may be provided with a male part of a click-on joining structure, and either the cover or the payment terminal itself or the support unit, may be provided with a female part of a click-on joining structure, so that the male part of the click-on joining structure may interact with the female part of the click-on joining structure, thereby holding the cover or the payment terminal itself to the support unit.

Yet another example, the joining structure may be one part of a Velcro® tape being attached to the support unit, and another part of a Velcro® tape being attached to the cover or the payment terminal itself. Thus, either the support unit or the cover or the payment terminal itself may be provided with a male part of a Velcro® tape, and either the cover or the payment terminal itself or the support unit, may be provided with a female part of a Velcro® tape, so that the male part of the Velcro® tape may interact with the female part of the Velcro® tape, thereby holding the cover or the payment terminal itself to the support unit.

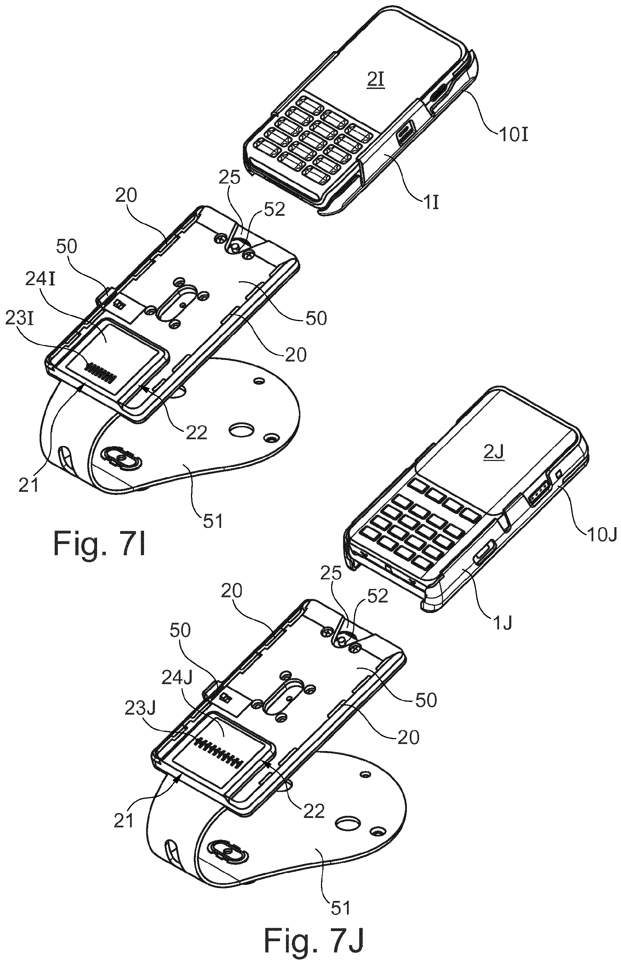

Fig. 7I and Fig. 7J show a holder for holding 40 for covers 1 or for holding a payment terminal itself, without the use of a cover. The holder 40 is supported by a table stand 41. Fig. 7I shows the holder 50 supported by the table stand and with one type of interface 21 provided. The interface 21 provided in the holder shown in Fig. 7I is for the Verifone® E355 standard. Fig. 7J shows basically the same holder as in Fig 7I supported by the same table stand as in Fig. 7I, however, with another type of interface 21 provided. The interface 21 provided in the holder shown in Fig. 7J is the Ingenico® ISMP4 Companion standard.

Fig. 7I also shows a first cover 1I in which a first payment terminal 2 from the company Verifone® is placed. The first cover with the first payment terminal is ready to be displaced linearly into the holder 50, so that grooves 10J on opposite side of the first cover 1I interact with tongues 20 one opposite sides of the holder 50. A rear side of the first payment terminal is provided with contact pads (see Fig. 1B) at specific positions of the rear side of the payment terminal. The interface 211 of the holder is provided with contact pads 231 at specific positions of the centre plate 24 of the interface 21. The specific positions, at which the contact pads 231 of the centre plate 24 of the interface 211 is positioned, correspond to the where the contact pads at the rear side of the first payment terminal 2 is positioned, when the first cover 1I with the first payment terminal 2 placed therein, is in place in the holder 50, after the first cover 1I has been fully displaced into the holder 50.

Fig. 7J also shows a second cover 1J in which a second payment terminal 2J from the company Ingenico® is placed. The second cover 1J with the second payment terminal 2J is ready to be displaced linearly into the holder 50, so that grooves 10J on opposite sides of the second cover 1J interact with tongues 20 of the holder 50. A rear side of the second payment terminal 2J is provided with contact pads (see Fig. 1B) at specific positions of the rear side of the payment terminal. The interface 21J of the holder 50 is provided with contact pads 23J at specific positions of the centre plate 24J of the interface 21. The specific positons at which the contact pads 23J of the centre plate 24J of the interface 21 is positioned correspond to the where the contact pads at the rear side of the second payment terminal 2J is positioned, when the second cover 1J with the second payment terminal placed therein, is in place in the holder 50, after the second cover 1J has been fully displaced into the holder 50.

Apart from the interface 21, the holder shown in Fig. 7I is the same as the holder shown in Fig. 7J. The one and same holder is thus capable of holding at least two different covers 1I, 1J for two different payment terminals 21, 2J by only inserting or exchanging one interface or the another interface, each interface being specifically selected depending on the payment terminal to be placed in the cover. However, the inner contour 12 (see Fig. 1B) of the aperture 11 (see Fig. 1B) is the same for both the first cover 1I and the second cover 1J.

Thereby, the outer contour 22 of the interface 21 may be the same for different covers. Only the centre plate 24 with holes 42 (see Fig. 6A-6D) for the contact pads 23 of the contact pad plate (also see Fig. 6A-6D) and the contact pad plate 41A,41B (See Fig. 6A-6D) itself, that need being selected or exchanged depending on the payment terminal 2I or 2J to be placed in the one and same holder 50. In an alternative embodiment of the interface 21, the centre plate 24 may be void of holes for contact pads.

Payment terminals exist, which do not have any contact pads at the rear side of the payment terminal. If such a payment terminal is to be placed in the holder, or if such a payment terminal is to be placed in a cover, and the cover for such payment terminal is to be placed in the holder, a centre plate with no holes may be inserted as part of the interface, simply for closing off access to the interior of the interface.

The holder shown in Fig. 7I And Fig. 7J also has a finger-release lock 50 as described with reference to Fig. 1A-3D. The description of the finger-release lock 50 shown and described with reference to Fig. 1A-3D is incorporated by reference into the present description of Fig. 7I and Fig. 7J.

All of the figures, Fig. 7A-7J, have a key lock 52 (see fig. 7I and Fig. 7J) being part of a locking structure. The key lock functions by a key bushing 53 with a key slot (not shown) wherein a specific key may be inserted for locking and unlocking the holder 50 to the table stand 10. The key busing 53 is part of the table stand 51, not part of the holder 50. However, each holder 50 has a male part of the locking structure identical to the female part of the locking structure as shown and described with reference to Fig. 1A-3D. And each of the covers 1 shown in Fig. 7A-7J has a male part of the locking structure similar to the male part shown and described with reference to Fig 1A-3D. The description of the male part 13 and the female part 25 shown and described with reference to Fig. 1A-3D is incorporated by reference into the present description of Fig. 7A-Fig. 7J. Using the key lock 52, after the cover 1 has been fully placed in the holder 50, results in the cover 1 not capable of being released from the holder 50. The key lock 52 functions as anti-theft means for the cover 1, and thus, the key lock 52 functions as anti-theft means for the payment terminal 2, when placed in the cover 1.

In Fig. 7A-7J, the joining structure is a groove and tongue joining structure, with the grove provided along opposite sides of the cover, or of the payment terminal itself, and with the tongues provided along opposite side edges of the holder.

Other types of joining structures may be used for holding the cover or the payment terminal itself to the holder. As example, the joining structure may be one part of a magnetic joining structure being a part of the holder and another part of a magnetic joining structure being part of the cover or the payment terminal itself. Thus, either the holder or the cover or the payment terminal itself may be provided with a magnet with a selected polarity, and either the cover or the payment terminal itself or the holder, respectively, may be provided with a piece of magnetic metal or with a magnet with a polarity opposite to the selected polarity, and which piece of metal, or which magnet with opposite polarity, the magnet with a selected polarity of the holder or the cover or the payment terminal itself may interact with, thereby holding the cover or the payment terminal itself to the holder.

Another example, the joining structure may be one part of a click-on joining structure being part of the holder, and another part of a click-on joining structure being part of the cover or the payment terminal itself. Thus, either the holder or the cover or the payment terminal itself may be provided with a male part of a click-on joining structure, and either the cover or the payment terminal itself or the holder, may be provided with a female part of a click-on joining structure, so that the male part of the click-on joining structure may interact with the female part of the click-on joining structure, thereby holding the cover or the payment terminal itself to the holder.

Yet another example, the joining structure may be one part of a Velcro® tape being attached to the holder, and another part of a Velcro® tape being attached to the cover or to the payment terminal itself. Thus, either the holder or the cover or the payment terminal itself may be provided with a male part of a Velcro® tape, and either the cover or the payment terminal itself or the holder, may be provided with a female part of a Velcro® tape, so that the male part of the Velcro® tape may interact with the female part of the Velcro® tape, thereby holding the cover or the payment terminal itself to the holder.

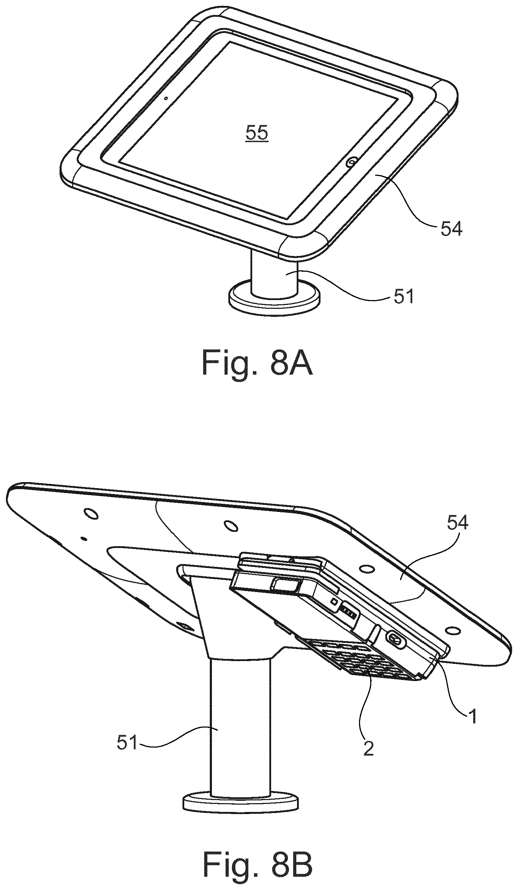

Fig. 8A and Fig. 8B show a holder 54 for holding a tablet 55 and for holding a cover 1 according to the invention at a rear side of the tablet holder 54. In the embodiment shown, the tablet holder 54 is supported by a table stand. However, in other uses of the tablet holder 54, the tablet holder may be carried by hand by a user. The tablet holder 54 for also holding the cover 1 with a payment terminal 2 placed therein are intended for holding, individually and separately, at least two different payment terminals, either different terminals in relation to size and shape and/or different payment terminal in relation to position of electrical pads for interface with equipment external to the payment terminal. By use of a cover 1 according to the invention, and by providing the rear side of the tablet holder 54 with tongues capable of interacting with the grooves of the cover or of the payment terminal itself, the tablet holder 54 is non-dependent on the payment terminal being placed to the holder as long as a distance between tongues provided along opposite linear lines of the holder have a mutual distance similar to a distance between the grooves along parallel opposite linear lines along side edges of the cover.

## Claims

1. Support unit capable of supporting at least two mobile devices,
- the support unit comprising at least two support surfaces for supporting the at least two mobile device along the support surfaces of the support unit, and where one of the at least two mobile devices is a payment terminal,
- at least one of the support surfaces comprising retaining elements of a type, a shape and a size congruent with a type, a shape and a size of the at least one mobile device, said retaining elements capable of retaining at least one mobile device to the at least one support surface, and
- the support unit having at least a first electric interface and a second electric interface for a corresponding first electric interface and second electric interface, respectively, of different first and second mobile devices, and
- the support unit having at least one electric socket of a type, a shape and a size congruent with a type, a shape and a size of a plug of a charging device being external to the support unit and capable of being electrically connected to the support unit, and
- and the support unit having a first wired connection between the at least one electric socket and the first electric interface and having a second wired connection between the at least one electric socket and the second electric interface.

2. A support unit according to claim 1, where both of the at least a first electrical interface and a second electric interface, both electric interfaces communicating electrically with only one electrical plug of the support unit, said electrical plug of the support unit capable of being connected to only one electrical plug of an electrical charger, whereby at least two different mobile devices connected to the first electrical interface and the second electrical interface, respectively, are capable of being electrically charged by the only one electrical charger, when the electrical plug of the support unit is connected to the electrical plug of the electrical charger, and when the at least two mobile devices are supported by the support unit and are connected to the electrical interfaces.

3. A support unit according to claim 1 or claim 2, where the support unit comprises a printed circuit board or other electronic circuit for controlling at least charging of the at least two mobile devices when supported by the support unit, where the electronic circuitry has a first wired connection extending between the electronic circuit and the first electrical interface, and where the electronic circuit has a second electrical wired extending between the electronic circuit and the second electrical interface, and where at least one of the first electrical connection and the second electrical connection are detachable and is replaceable by another electrical connection, whereby various mobile devices may be supported by the support unit and may be connected with an electrical plug of the support unit.

4. A support unit according to any of the preceding claims, where at least one of the electrical plugs of the support unit is in a fixed position of the support unit when the electrical plug is connected via the electrical connection to the electronic circuit of the support unit, and where the fixed position of the electrical plug is selected and provided so that the location of the electrical plug of the support unit is in a position corresponding to a position of an electrical plug or electrical contact pads of the mobile device intended for being electrically charged, when the mobile device is supported by the support unit.

5. A support unit according to any of the preceding claims, where the electrical interface for the one mobile device being a payment terminal is configured as a contact surface provided with a plurality of electrical pads extending substantially along the contact surface, the electrical pads of the contact surface being provided at locations along the plane contact surface corresponding to correlating contact pads of the payment terminal, and where the contact surface is detachable and is replaceable by another contact surface, whereby various payment terminals may be supported by the support unit and may be connected with the electrical pads of the contact surface.

6. A support unit according to any of the preceding claims, where the retaining elements for retaining the one mobile device being a payment terminal consist of tongues extending along linear lines at opposite sides of a support surface for the payment terminal, said tongues intended for interacting with corresponding grooves extending along opposite sides of the payment terminal, when the payment terminal is supported by the support unit, the tongues and grooves thereby retaining the payment terminal to the support unit, when the payment terminal is supported by the support unit.

7. A support unit according to any of the preceding claims, where the retaining elements for retaining the one mobile device being a payment terminal consist of tongues extending along linear lines at opposite sides of a support surface for a cover for the payment terminal, said tongues intended for interacting with corresponding grooves extending along opposite sides of a payment terminal cover, when the payment terminal cover is supported by the support unit, the tongues and grooves thereby retaining the payment terminal cover to the support unit, when the payment terminal cover is supported by the support unit, and the payment terminal cover thereby retaining the payment terminal to the support unit, when the payment terminal is supported by the payment terminal cover.

8. A support unit according to any of the preceding claims, said support unit having an electrical interface with contact pads for electrical contact with corresponding electrical contact pads of a payment terminal to be supported by the support unit, and where the electrical interface has an outer contour, said outer contour of the electrical interface having a size and a shape being congruent with a size and shape of an inner contour of an aperture of a cover for the payment terminal, said cover having a cavity intended for and capable of having a selected payment terminal placed therein, and said cover intended for and capable of being retained to the support unit.

9. A support unit according to any of the preceding claims, where at least one of the mobile devices is provided with a mobile phone frame for partly covering one mobile device being a mobile phone, said mobile phone frame having fastening elements for fastening the mobile phone frame to the at least one support surface of the support unit, whereby the mobile phone, when supported by the support unit and when fastened to the support surface by the mobile phone frame is fixed to the support unit, and said mobile phone framer having an aperture allowing access through the mobile phone frame to a user interface of the mobile phone, when the mobile phone is supported by the support unit.

10. A cover for a payment terminal, said cover having a having a cavity intended for and capable of having a selected payment terminal placed therein, and said cover intended for and capable of being retained to the support unit by said cover having grooves extending outside the cavity and along parallel linear lines at opposite sides of the cover, said grooves intended for interacting with corresponding tongues extending along parallel linear lines at opposite sides of a support unit for supporting the cover, and when the cover is supported by the support unit, the tongues and grooves thereby retaining the cover to the support unit, and the cover thereby retaining the payment terminal to the support unit, when the payment terminal is placed in the cover.

11. A cover according to claim 10, said cover having an aperture with an inner contour, said inner contour of the aperture having a size and shape congruent with an outer contour of an electrical interface of a support unit, said cover having a cavity intended for and capable of having a selected payment terminal placed therein, and said cover intended for and capable of being retained to the support unit, and said electrical interface of the support unit having contact pads for electrical contact with corresponding electrical contact pads of a payment terminal to be placed in the cover.

12. A plurality of covers for payment terminals, said plurality of covers comprising at least a first cover and a second cover,
- said first cover having grooves extending outside the cavity and along linear lines at opposite sides of the cover, said grooves intended for interacting with corresponding tongues extending along opposite sides of a support unit for supporting the payment terminal cover, and when the payment terminal cover is supported by the support unit, the tongues and grooves thereby retaining the payment terminal cover to the support unit, when the payment terminal cover is supported by the support unit, and the payment terminal cover thereby retaining the payment terminal to the support unit, when the payment terminal is supported by the payment terminal cover, and
- said second cover having grooves extending outside the cavity and along linear lines at opposite sides of the cover, said grooves intended for interacting with corresponding tongues extending along opposite sides of a support unit for supporting the payment terminal cover, and when the payment terminal cover is supported by the support unit, the tongues and grooves thereby retaining the payment terminal cover to the support unit, when the payment terminal cover is supported by the support unit, and the payment terminal cover thereby retaining the payment terminal to the support unit, when the payment terminal is supported by the payment terminal cover, and
- where a distance between the parallel linear lines of the first cover is the same as a distance between the parallel linear lines of the second cover, whereby the first cover and the second cover, individually, is capable of being supported by the one and same support unit having tongues extending along parallel linear lines, provided a distance between the parallel linear lines of the tongues of the support unit is less than the distance between the parallel linear lines of the plurality of payment terminal covers.
